Europäisches Patentamt

European Patent Office

Office européen des brevets

(11) Numéro de publication: **0 239 483**
**A1**

## DEMANDE DE BREVET EUROPEEN

(21) Numéro de dépôt: **87400623.2**

(22) Date de dépôt: **20.03.87**

(51) Int. Cl.⁴: **F 16 L 3/12**

(30) Priorité: **21.03.86 FR 8604112**

(43) Date de publication de la demande:
**30.09.87 Bulletin 87/40**

(84) Etats contractants désignés: **DE ES FR GB IT**

(71) Demandeur: **ETABLISSEMENTS HB**
**22 Rue de Curembourg**
**F-45400 Fleury-les-Aubrais (FR)**

(72) Inventeur: **Pascor, Michel**
**19, Rue de la Croix Nas**
**F-45190 Beaugency (FR)**

(74) Mandataire: **Casalonga, Alain et al**
**BUREAU D.A. CASALONGA OFFICE JOSSE & PETIT**
**Morassistrasse 8**
**D-8000 München 5 (DE)**

(54) **Collier de fixation de tuyauterie.**

(57) Collier de fixation de tuyauterie comportant une partie annulaire (1) enserrant la tuyauterie (2) et munie d'une garniture de contact (10) ainsi qu'une partie (3) formant patte de fixation, caractérisé par le fait que la garniture (10) est constituée par une gaine tubulaire souple formée par retournement à l'une de ses extrémités (11) et fixée sur le collier par serrage au voisinage de son extrémité ouverte (12).

FIG.1

EP 0 239 483 A1

## Description

Collier de fixation de tuyauterie.

La présente invention a pour objet un collier permettant la fixation de tuyauterie souple ou rigide sur un élément ou une paroi fixe.

On connaît des colliers de fixation de ce type permettant de fixer des tuyauteries en général souples et utilisés par exemple dans l'industrie automobile et dans l'industrie aéronautique. De tels colliers comportent une partie annulaire qui vient enserrer la tuyauterie ainsi qu'une partie formant patte de fixation qui peut par exemple coopérer avec une vis en vue de la fixation sur l'élément ou la paroi fixe. Ces colliers de fixation comportent habituellement une garniture de contact qui peut par exemple dans certaines applications assurer une isolation en particulier isolation thermique entre la tuyauterie et la paroi fixe.

La présente invention a pour objet un collier de fixation de tuyauterie de ce type présentant par rapport au collier connu l'avantage de simplifier et d'améliorer la solidarisation de la gaine de contact avec le collier de fixation lui-même.

L'invention a également pour objet de permettre la réalisation d'un collier de fixation de tuyauterie muni d'une garniture isolante résistant à de très hautes températures.

Le collier de fixation de tuyauterie souple ou rigide selon l'invention comporte une partie annulaire enserrant la tuyauterie et munie d'une garniture de contact ainsi qu'une partie formant une patte de fixation. Selon l'invention la garniture de contact est constituée par une gaine tubulaire souple formée par retournement à l'une de ses extrémités et fixée sur le collier par serrage au voisinage de son autre extrémité ouverte.

Grâce à une telle disposition, la fixation de la gaine tubulaire souple sur le collier est simplifiée et les risques d'éffilochage de l'extrémité ouverte de la garniture de contact sont considérablement limités.

Dans le cas où la partie annulaire du collier de fixation se prolonge tangentiellement par une patte de fixation, l'extrémité ouverte de la gaine tubulaire souple formant garniture de contact est de préférence fixée par serrage ou frettage sur ladite patte de fixation.

Dans ce cas la fixation de l'extrémité ouverte de la gaine est de préférence réalisée par une plaque de serrage solidaire de l'une des faces de la patte de fixation et présentant des branches latérales qui sont repliées et serrées sur l'extrémité ouverte de la gaine, réalisant ainsi un frettage qui garantit la fixation de la gaine sur le collier.

Pour rattraper l'épaisseur de la gaine sans entraîner l'écrasement de cette dernière au voisinage de la zone de frettage, une entretoise est avantageusement placée entre la plaque de serrage et la patte de fixation dans la zone dénuée de gaine, cette entretoise ayant sensiblement l'épaisseur de la gaine.

Les colliers de fixation de ce type présentent généralement une extrémité repliée prolongeant la partie annulaire à l'opposé de la patte de fixation et destinée à coopérer avec une vis de fixation qui traverse de part en part la patte de fixation et l'extrémité repliée. Dans ce cas l'extrémité fermée de la gaine tubulaire souple vient de préférence prendre appui sur ladite extrémité repliée du collier de fixation.

L'invention sera mieux comprise à l'étude de la description détaillée d'un mode de réalisation particulier faite à titre d'exemple nullement limitatif et illustré par les dessins annexés sur lesquels :

     la figure 1 est une vue en coupe d'un collier de fixation de tuyauterie selon l'invention; et

     la figure 2 est une vue partielle selon II-II de la figure 1 montrant le serrage de la garniture de contact sur la patte de fixation du collier.

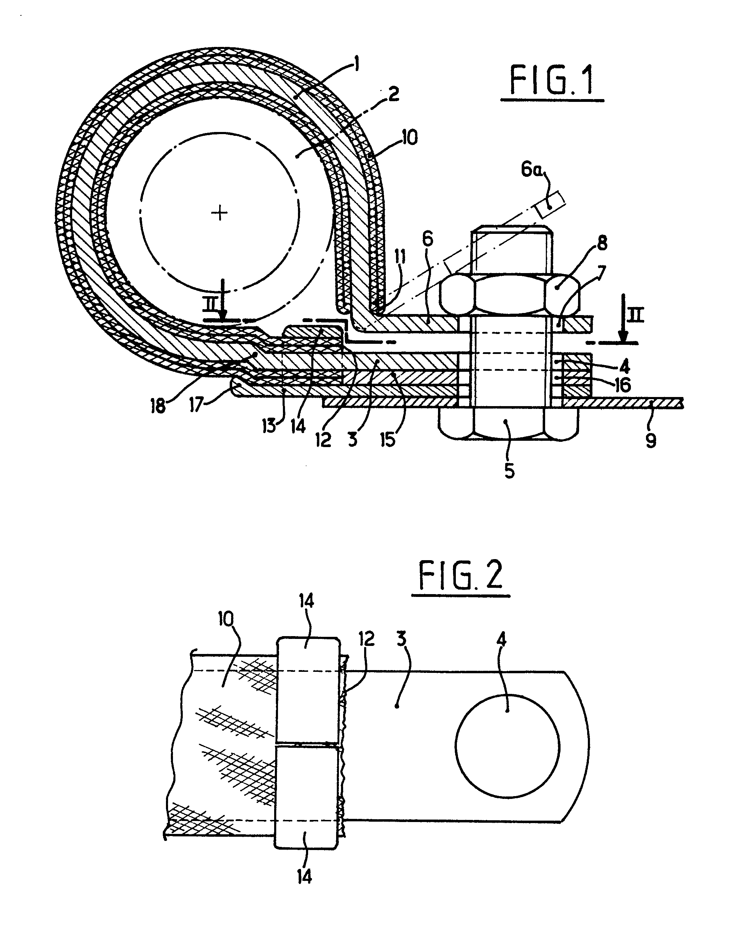

Tel qu'il est illustré sur les figures, le collier de fixation comporte une partie annulaire 1 qui vient enserrer une tuyauterie souple ou rigide 2. L'une des extrémités de la partie annulaire 1 se prolonge de manière sensiblement tangentielle par une patte de fixation 3 présentant un trou 4 pour le passage d'une vis de fixation 5. L'autre extrémité de la partie annulaire 1 à l'opposée de la patte de fixation 3 se prolonge par une extrémité repliée 6 formant, avant fixation, un angle aigu avec la partie annulaire 1, comme illustré sur la figure 1 dans la position 6a en trait mixte. L'extrémité repliée 6 présente également un trou 7 qui reçoit la même vis 5, le serrage étant effectué par l'intermédiaire de l'écrou 8. Le collier de fixation, réalisé par exemple en acier, présente de ce fait une certaine élasticité, ce qui permet d'assurer un serrage convenable de la tuyauterie 2 lors de la fixation du collier par l'intermédiaire de la patte de fixation 3 sur une paroi fixe 9 au moyen de la vis 5. Dans ce cas, l'extrémité repliée 6 vient prendre la position représentée en trait plein sur la figure 1 par élasticité.

La garniture de contact interposée entre la partie annulaire 1 et la surface extérieure de la tuyauterie 2 est constituée par une gaine tubulaire souple 10 qui est fermée par retournement sur elle-même à son extrémité 11 qui vient buter sur l'angle formé entre la partie annulaire 1 et l'extrémité repliée 6.

L'autre extrémité ouverte de la gaine tubulaire souple 10 est fixée par serrage sur la patte de fixation 3 dans la zone de jonction de celle-ci avec la partie annulaire 1. La fixation de cette extrémité 12 ouverte de la gaine tubulaire 10 se fait au moyen d'une plaque de serrage 13 qui présente sensiblement les mêmes dimensions que la patte de fixation 3. La plaque de serrage 13 présente des branches latérales 14 qui sont repliées vers l'intérieur de la partie annulaire 1 et viennent serrer l'extrémité ouverte 12 de la gaine 10, assurant ainsi la fixation de cette dernière sur la patte de fixation 3 par un effet de frettage.

Pour éviter d'écraser l'extrémité 12 de la gaine 10, une plaque entretoise supplémentaire 15 ayant la même largeur que la patte de fixation 3 et la plaque de serrage 13 est interposée entre ces dernières dans la zone de la patte de fixation 3 qui est dénuée de gaine tubulaire 10. L'entretoise 15 présente également un trou 16 permettant le passage de la vis de fixation 5. La plaque entretoise 15 s'arrête au droit de l'extrémité ouverte 12 de la gaine 10 comme on peut le voir sur la figure 1.

Les trois éléments que constituent la patte de fixation 3, la plaque d'entretoise 15 et la plaque de serrage 13 et qui ont tous la même largeur sont rendus solidaires les uns des autres par exemple par soudage.

L'amélioration de la fixation est encore obtenue par le bord extrême 17 de la plaque de serrage 13 et le décrochement 18 qui se trouve à la jonction entre la partie annulaire 1 et la patte de fixation 3 du collier de fixation. Le décrochement 18, en combinaison avec le rebord en saillie 17, réalise en effet un serrage complémentaire à l'endroit de la jonction entre la partie annulaire 1 et la patte de fixation 3.

La gaine tubulaire souple 10 ainsi retournée sur elle-même présente donc deux épaisseurs intercalées entre le tuyauterie 2 et la partie annulaire 1 du collier de fixation. La solidarisation de la gaine tubulaire se fait uniquement au voisinage de son extrémité ouverte 12 ce qui limite considérablement les risque d'effilochage. A son extrémité fermée il n'y a en effet aucun risque de ce type.

La gaine tubulaire 10 est avantageusement réalisée en un matériau résistant à très haute température jusqu'à environ 1000°C. Elle peut être par exemple réalisée par tressage de fibres en matériau céramique par exemple en silice.

## Revendications

1. Collier de fixation de tuyauterie comportant une partie annulaire (1) enserrant la tuyauterie (2) et munie d'une garniture de contact (10) ainsi qu'une partie (3) formant patte de fixation, caractérisé par le fait que la garniture (10) est constituée par une gaine tubulaire souple fermée par retournement à l'une de ses extrémités (11) et fixée sur le collier par serrage au voisinage de son autre extrémité ouverte (12).

2. Collier de fixation selon la revendication 1, dans lequel la partie annulaire (1) se prolonge sensiblement tangentiellement par une patte de fixation (3), caractérisé par le fait que l'extrémité ouverte (12) de la gaine (10) est fixée par serrage sur ladite patte de fixation (3).

3. Collier de fixation selon la revendication 2, caractérisé par le fait que la fixation de l'extrémité ouverte (12) de la gaine est réalisé par une plaque de serrage (13) solidaire de l'une des faces de la patte de fixation (3) et présentant des branches latérales (14) repliées et serrées sur l'extrémité ouverte (12) de la gaine.

4. Collier de fixation selon la revendication 3, caractérisé par le fait qu'une entretoise (15) est placée entre la plaque de serrage (13) et la patte de fixation (3) dans la zone de cette dernière dénuée de gaine (10), l'entretoise (15) ayant sensiblement la même épaisseur que la gaine (10).

5. Collier de fixation selon l'une quelconque des revendications 2 à 4, dans lequel la partie annulaire (1) du collier se prolonge, à l'opposé de la patte de fixation (3), par une extrémité repliée (6) destinée à coopérer avec une vis de fixation (5) traversant également la patte de fixation (3), caractérisé par le fait que l'extrémité fermée (11) de la gaine (10) vient prendre appui sur ladite extrémité repliée (6).

6. Collier de fixation selon l'une quelconque des revendications précédentes, caractérisé par le fait que la gaine (10) est réalisée en un matériau résistant à très haute température.

7. Collier de fixation selon la revendication 6, caractérisé par le fait que la gaine est réalisée en fibres céramiques tressées.

0239483

## FIG.1

## FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 139 253  (CRAWFORD Jr.)<br><br>* Figures 7-10; colonne 1, lignes 46-72; colonne 2, lignes 1-30; colonne 4, lignes 74-71 * | 1-3,6, 7 | F 16 L    3/12 |
| | --- | | |
| A | US-A-3 196 535  (CRAWFORD Jr.)<br><br>* Figures 7-10; revendications 1-2 * | 1-3,6, 7 | |
| | ----- | | |

DOMAINES TECHNIQUES
RECHERCHES (Int. Cl.4)

F 16 L

Le présent rapport de recherche a été établi pour toutes les revendications

| Lieu de la recherche | Date d'achèvement de la recherche | Examinateur |
|---|---|---|
| LA HAYE | 16-06-1987 | NOESEN R.F. |